# EUROPEAN PATENT APPLICATION

(11) **EP 1 696 304 A2**
(43) Date of publication of application: **30.08.2006**
(21) Application number: 06110346.1
(22) Date of filing: 23.02.2006
(51) Int. Cl.: G06F 1/32

(54) **Information processing apparatus and method of controlling power saving in the same**

(30) Priority: 25.02.2005 JP 2005052110
(71) Applicant: KABUSHIKI KAISHA TOSHIBA, Tokyo 105-8001 (JP)
(72) Inventor: Ono, Yukiya, Tokyo 105-8001 (JP)
(74) Representative: Henkel, Feiler & Hänzel

(57) **Abstract**

According to the embodiment, there is provided an information processing apparatus including: an image correcting unit that performs a correction for enhancing an image quality on image data; a power source detecting unit that detects a type of a power source supplying an electric power to the information processing apparatus; and a correction controlling unit that controls the correction by the image correcting unit on the basis of a result of the detection by the power source detecting unit.

## Description

### CROSS-REFERENCE TO RELATED APPLICATIONS

This application is based upon and claims the benefit of priority from Japanese Patent Application No. 2005-052110, filed on February 25, 2005, the entire contents of which are incorporated herein by reference.

### BACKGROUND

### 1. Field

One embodiment of the invention relates to an information processing apparatus such as a personal computer, and a method of controlling power saving in the apparatus.

### 2. Description of the Related Art

Recently, as typified by a notebook or mobile personal computer (hereinafter, abbreviated to "PC") and a PDA (Personal Digital Assistant), various portable information processing apparatuses which can be driven by a battery have been developed. In many of such portable information processing apparatuses, a power saving function is mounted in order to prolong the life of a battery.

An information processing apparatus is known in which a power source controlling driver of the BIOS is provided with a function of changing an operation clock frequency of a CPU, and the power source controlling driver can set a normal mode where the ability of the CPU is maximized, or a power save mode where priority is given to power saving over the ability of the CPU (for example, see US2004/0158748A1).

A power control utility program which is implemented on the information processing apparatus of the publication executes a power saving control in which, when an Audio/Visual (AV) application program involving encoding and decoding requiring the maximum ability of the CPU operates, the process transfers to the normal mode, and, when the AV application program does not operate and other application program operates, the process transfers to the power save mode.

In the information processing apparatus, in the case where an AV application program involving encoding and decoding operates or a DVD (Digital Versatile Disc) or the like is reproduced, even when the user selects the power save mode, therefore, the apparatus operates in the normal mode where the ability of the CPU is maximized. In view of a use such as where a movie recorded on a DVD is watched on a portable PC (a use where the power save mode is not set), consequently, the life of the battery which is an important issue of a portable PC is to be prolonged.
The above object is achieved by means of an information processing apparatus according to claim 1 and by a method according to claim 6. The dependent claims are directed to different advantageous aspects of the invention.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary block diagram functionally showing a hardware configuration of an information processing apparatus according to an embodiment of the invention;

Fig. 2 is an exemplary block diagram showing a software function to be realized by an image reproduction program installed in the information processing apparatus of Fig. 1;

Fig. 3 is an exemplary flowchart showing a control of switching the operation mode of the information processing apparatus shown in Fig. 1;

Fig. 4 is an exemplary flowchart showing an operation of switching the brightness of an LCD in accordance with the operation mode switching control of Fig. 3; and

Fig. 5 is an exemplary flowchart showing a control of the image correcting operation for enhancing the image quality of image data in accordance with the operation mode switching control of Fig. 3.

### DETAILED DESCRIPTION

Various embodiments according to the invention will be described hereinafter with reference to the accompanying drawings.

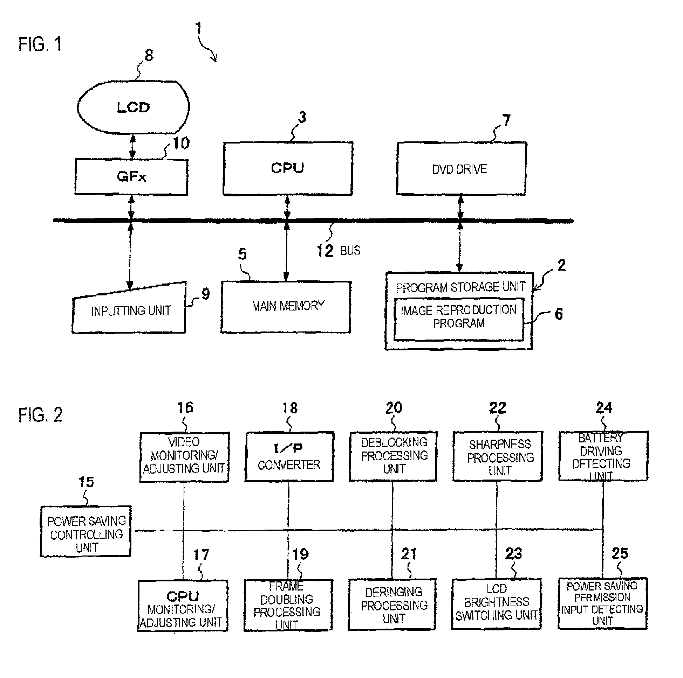

Fig. 1 is an exemplary block diagram functionally showing a hardware configuration of an information processing apparatus which is an embodiment of the invention, and Fig. 2 is an exemplary block diagram showing a software function to be realized by an image reproduction program installed in the information processing apparatus.

As shown in Fig. 1, the information processing apparatus 1 is, for example, a notebook PC, and includes: a CPU 3; a main memory 5 configured by a DRAM (Dynamic Random Access Memory) or the like; a program storage unit 2 realized by a hard disk or the like; a graphics chip 10 which produces drawing image data on the basis of drawing instructions received from the CPU 3, and which supplies the data to an LCD 8; and the LCD (Liquid Crystal Display) 8 which visually displays the drawing image data.

In the information processing apparatus 1, furthermore, an inputting unit 9 including a mouse and a keyboard, a DVD drive 7 which reads data from various DVD media, and the like are disposed. These devices of the information processing apparatus 1 are connected to a bus (system bus) 12 to which the CPU 3 is directly connected, via various buses which branch off via a north bridge or a south bridge, or a predetermined interface.

The image reproduction program 6 which reproduces (decodes) image (motion picture) data stored on a DVD loaded into the DVD drive 7 or in the program storage unit 2 is installed in the program storage unit 2. During execution of the image reproduction program 6, the CPU 3 reserves a working area in the main memory 5, and loads the program thereinto. The image reproduction program which is loaded in this way executes image processing involving decoding compression-coded image data such as MPEG-2.

Specifically, as shown Fig. 2, a battery driving detecting unit 24, a power saving permission input detecting unit 25, an LCD brightness switching unit 23, an I/P converter 18, a frame doubling processing unit 19, a deblocking processing unit 20, a deringing processing unit 21, a sharpness processing unit 22, a video monitoring/adjusting unit 16, a CPU monitoring/adjusting unit 17, and a power saving controlling unit 15 which generally controls these units are realized as software functions by the image reproduction program which is being executed.

The I/P converter 18 is a processing unit which realizes so-called interlace/progressive (non-interlace) conversion, and combines interlace signals respectively corresponding to even and odd fields, to produce a frame serving a progressive video signal. The frame doubling processing unit 19 cooperates with the I/P converter 18 to perform conversion to a progressive image having a doubled amount of information, and actually is a processing unit which doubles the number of frames produced by the I/P converter 18. Specifically, the frame doubling processing unit 19 copies frames obtained in progressive conversion to produce identical frames, or predicts and newly produces a frame corresponding to an intermediate transient motion picture from relationships of the preceding and succeeding frames, thereby doubling the number of frames. Even in the case of fast-moving video, therefore, a process of enhancing the image quality is performed to draw a natural-motion picture in which flicker is suppressed.

The deblocking processing unit 20 performs a finer gradation displaying process so as to suppress occurrence of block noises, and corrects image data so that clear video display can be realized, and, even in the case of video in which similar colors are extensively used, clear video display can be performed. The deringing processing unit 21 performs a digital process to reduce ringing noises which may occur as a result of reverberation of a video signal in internal circuits and the like (white misty noises which appear in the periphery of a character in a telop and the like). Namely, the deringing processing unit 21 performs a process of enhancing the image quality which sharpens edges of a display image to facilitate visualization of character information such as a caption. The sharpness processing unit 22 applies sharpness correction (a sharpness process) on an image in horizontal and vertical directions by mainly using a sampling technique so as to display outline-emphasized video which has a three-dimensional appearance, and in which sharpness of the whole video is consistent with smoothness of a curved portion, thereby improving clearness of an image and enhancing the quality of a video signal.

Namely, the deblocking processing unit 20, the deringing processing unit 21, the sharpness processing unit 22, and the frame doubling processing unit 19 which are configured to serve as an image correcting unit which makes a correction for enhancing an image quality on image data.

The battery driving detecting unit 24 is a power source detecting unit which, when, for example, a predetermined detection circuit detects that an adaptor terminal of an AC commercial power source serving as an external power source is extracted from a power input terminal portion of the body of the information processing apparatus 1, receives a detection signal indicative of the extraction to detect that the information processing apparatus 1 is driven by a battery (and the contrary case, or that the information processing apparatus 1 is driven by the external power source). When the battery driving detecting unit 24 detects that the information processing apparatus 1 is driven by the external power source, the power saving controlling unit 15 causes the information processing apparatus 1 to operate in a normal power mode where the correction for enhancing an image quality on image data is made. When the battery driving detecting unit 24 detects that the information processing apparatus 1 is driven by the battery, the power saving controlling unit 15 causes the information processing apparatus 1 to operate in a power save mode where the correction for enhancing an image quality on image data is restricted (in the embodiment, the image correction is not performed). Namely, the power saving controlling unit 15 functions as a correction controlling unit which controls the operation of image correction based on a result of the detection of the type of the power source.

Even when the operation mode of the information processing apparatus 1 is set to the power save mode, the power saving permission input detecting unit 25 functions as correction control inhibiting unit for inhibiting a control of restricting the correction for enhancing an image quality. Specifically, the power saving permission input detecting unit 25 detects an input signal from a power saving permission button which is visually displayed as an object on, for example, the LCD 8 (or a power saving permission button which is physically placed in a casing portion of the body of the information processing apparatus 1) . When the input signal is not detected, even in the case of battery driving, the operation mode is compulsively set to the normal power mode. Namely, the power saving permission input detecting unit 25 can substantially determine whether the control of the operation of correcting image data is inhibited or not. Therefore, the user is enabled to select by means of input/non-input from the button whether priority is given to the quality of an image displayed on the LCD 8 or to the life of the battery power source.

The LCD brightness switching unit 23 monitors input/output signals of circuits in a device controlling the operation of a backlight of the LCD 8, to detect that, when the operation mode of the body of the information processing apparatus 1 is the power save mode, the brightness of the LCD 8 is switched to 50% of the brightness in the normal power mode. When the operation mode of the body of the information processing apparatus 1 is the power save mode, the video monitoring/adjusting unit 16 dynamically adjusts an image with respect to brightness, contrast, hue, and vividness on the basis of information relating to the visibility of an actual image to de displayed on the LCD 8 (a dynamic change of the visibility corresponding to a change in colors of a motion picture or the like). When the operation mode of the body of the information processing apparatus 1 is the power save mode, the CPU monitoring/adjusting unit 17 monitors the operation of the CPU 3, and situations such as frame drops caused by a phenomenon where image data overflow a so-called buffer, and dynamically controls the utilization ratio of the CPU. For example, the utilization ratio of the CPU is controlled by the clock throttling control in which an operation clock frequency of the CPU is linearly changed, or Speed Step (trademark) in which the operation clock frequency of the CPU is stepwisely changed. Specifically, when many frame drops occur, the performance of the CPU is raised. When the utilization ratio of the CPU is excessively high and it is expected that the power consumption becomes too large, the performance of the CPU is lowered.

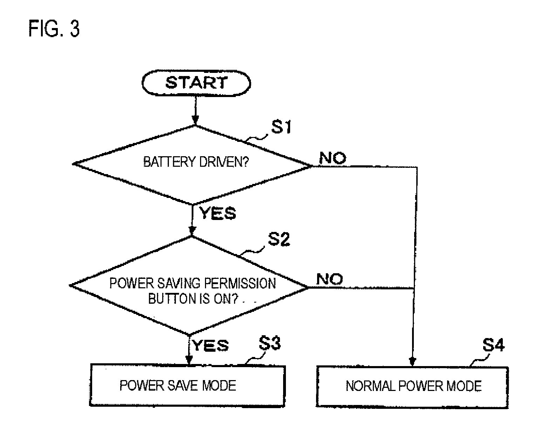

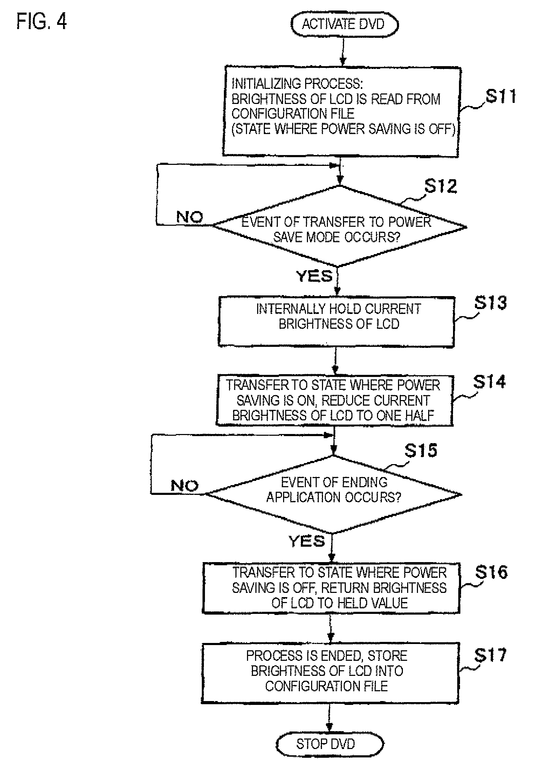

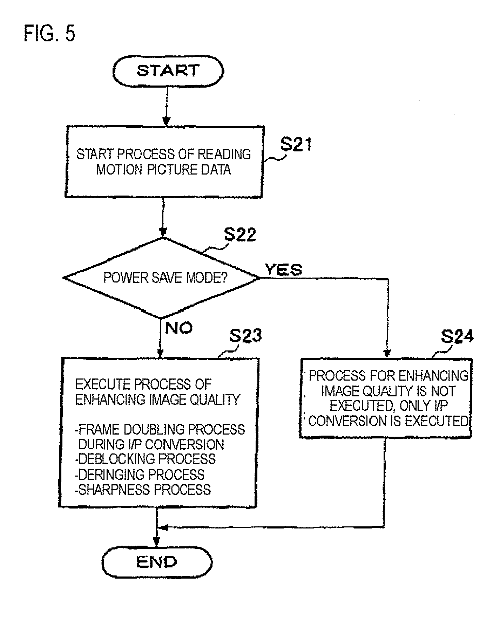

Next, the operation control executed by the image reproduction program 6 will be described with reference to the flowcharts shown in Figs. 3-5. Fig. 3 is an exemplary flowchart showing a control of switching the operation mode of the information processing apparatus 1, Fig. 4 is an exemplary flowchart showing an operation of switching the brightness of the LCD 8 in accordance with the operation mode switching control of Fig. 3, and Fig. 5 is an exemplary flowchart showing a control of the image correcting operation for enhancing the image quality of image data in accordance with the operation mode switching control of Fig. 3.

First, the control of switching the operation mode of the information processing apparatus 1 will be described.

As shown Fig. 3, when the battery driving detecting unit 24 detects that the information processing apparatus 1 is driven by the battery (YES in S1), and the power saving permission input detecting unit 25 detects the input signal from the power saving permission button (YES in S2), the power saving controlling unit 15 sets the operation mode of the information processing apparatus 1 to the power save mode (S3) . By contrast, when it is detected that the information processing apparatus 1 is driven by the external power source (NO in S1), or when the input signal from the power saving permission button is not detected (NO in S2), the operation mode of the information processing apparatus 1 is set to the normal power mode (S4).

Next, the operation of switching the brightness of the LCD 8 in accordance with the operation mode switching control will be described. The following description is made with respect to an operation reproducing a DVD or the like.

As shown in Fig. 4, when a DVD (DVD medium) is loaded into the DVD drive 7 and a process of reproducing the DVD is then started, an initializing process is performed, and the brightness of the LCD 8 is read from a predetermined configuration file (S11). When an event of transferring to the power save mode thereafter occurs (S12), the operation mode of the information processing apparatus 1 is changed from the normal power mode to the power save mode, and the current brightness of the LCD 8 is stored (S13). Next, the current brightness of the LCD 8 is reduced to 50% (S14). When an event of ending the image reproduction program 6 occurs (S15), the operation mode of the information processing apparatus 1 is again set from the power save mode to the normal power mode, and the brightness of the LCD 8 is returned to the stored brightness (S16) . Thereafter, an ending process is performed, and the current brightness of the LCD 8 is stored in a configuration file (S17).

Next, the control of the process of enhancing the image quality of image data (correcting an image) in accordance with the operation mode switching control will be described.

As shown in Fig. 5, a process of reading (decoding) motion picture data recorded on the DVD by MPEG2 or the like is started (S21), and then it is detected whether the operation mode of the information processing apparatus 1 is the normal power mode or the power save mode (S22). When it is detected that the operation mode is not the power save mode but the normal power mode (NO in S22), all of the deblocking processing unit 20, the deringing processing unit 21, the sharpness processing unit 22, and the frame doubling processing unit 19 are caused to operate together with the I/P converter 18, thereby executing the correcting process for enhancing the image quality of image data (S23).

In the case of the normal power mode, the motion detection may be conducted during the I/P conversion, so that an image which is progressive converted is corrected. Specifically, an example of a high-quality process of the motion detection is a process in which preceding and succeeding frames with respect to the processed frame are referred, and motion is detected on the bases of the frames. An example of a medium-quality process is a process in which the motion detection is conducted between the even and odd fields of the same frame, and that of a low-quality process is progressive conversion not involving such motion detection. In the normal power mode, the high-quality process of the motion detection, or at least the medium-quality process is executed.

By contrast, when it is detected that the operation mode is not the normal power mode but the power save mode (YES in S22), all of the deblocking processing unit 20, the deringing processing unit 21, the sharpness processing unit 22, and the frame doubling processing unit 19 are caused to stop operating, and interlace/progressive conversion is executed (S24) by the I/P converter 18. In the case of the power save mode, during the progressive conversion, progressive conversion not involving motion detection serving as the above-mentioned low-quality process is executed. Even when setting is done so that motion detection is conducted in the power save mode, motion detection is preferably restricted at a maximum to the above-mentioned medium-quality process.

As described above, in the information processing apparatus 1 of the embodiment, when the battery power source is detected as the driving power source, it is controlled so as not to execute the process of enhancing an image quality on image data, whereby the amount of image data to be transferred from the main memory 5 to the graphics chip 10 can be reduced, and the data process to be executed by the CPU 3 itself can be lessened. According to the configuration, the power consumptions of the main memory 5 and the CPU 3 can be reduced, and therefore the life of the battery power source can be prolonged.

As described above, according to the embodiment, there is provided an information processing apparatus in which power saving can be attained by changing the contents of a process on image data in accordance with the type of a driving power source supplying an electric power to the apparatus, and a method of controlling power saving in the apparatus.

In the above, the invention has been specifically described by way of the embodiment. The invention is not limited to the configuration of the embodiment described above, and may be variously modified without departing from the spirit of the invention. In the normal power mode, for example, image data corresponding to 1,024 x 768 pixels are transmitted, and, in the power save mode, transmitted data are decimated to data corresponding to one half of the image data or 512 x 384 pixels, or to one half of the half of the image data (one fourth of the original data). In this case, the amount of image data to be transferred from the main memory 5 to the graphics chip 10 can be decreased, and therefore the power consumption due to the transfer process can be reduced.

As described with reference to the embodiment, there is provided an information processing apparatus including: an image correcting unit that performs a correction for enhancing an image quality on image data; a power source detecting unit that detects a type of a power source supplying an electric power to the information processing apparatus; and a correction controlling unit that controls the correction by the image correcting unit on the basis of a result of the detection by the power source detecting unit.

There is also provided a method for controlling power saving in an information processing apparatus, the method including: performing a correction for enhancing an image quality on image data; detecting a type of a power source supplying an electric power to the information processing apparatus; and controlling the correction on the basis of a result of the detected type of the power source.

According to the above configurations, a process of enhancing an image quality on image data is controlled in accordance with the type of the power source supplying an electric power to the apparatus. Accordingly, when a battery power source is detected as a driving power source, for example, the power consumption of a CPU and a main memory can be reduced by restricting the process of enhancing an image quality on image data, and hence the life of the battery power source can be prolonged. When a function of compulsively inhibiting the control (causing the control not to be implemented) of the correction controlling unit on the image correcting unit is added, the user can select whether priority is given to the quality of a displayed image or to the life of the battery power source.

It is to be understood that the invention is not limited to the specific embodiment described above and that the invention can be embodied with the components modified without departing from the spirit and scope of the invention. The invention can be embodied in various forms according to appropriate combinations of the components disclosed in the embodiment described above. For example, some components may be deleted from all components shown in the embodiment. Further, the components in different embodiments may be used appropriately in combination.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An information processing apparatus comprising:
an image correcting unit that performs a correction for enhancing an image quality on image data;
a power source detecting unit that detects a type of a power source supplying an electric power to the information processing apparatus; and
a correction controlling unit that controls the correction by the image correcting unit on the basis of a result of the detection by the power source detecting unit.

2. The information processing apparatus according to claim 1, wherein the power source detecting unit detects that whether the power source is a battery mounted to the information processing apparatus or an external power source, and
wherein the correction controlling unit regulates the correction by the image correcting unit when the power source detecting unit detects that the power source is the battery.

3. The information processing apparatus according to claim 1, further comprising a correction control inhibiting unit that inhibits a control of the correction controlling unit on the image correcting unit.

4. The information processing apparatus according to claim 1, wherein the correction of the image data by the image correcting unit includes at least one of: a deblocking process for suppressing generation of block noises in a displayed image; a deringing process for suppressing generation of ringing noises in the displayed image; a sharpness process for emphasizing an outline of the displayed image; and a frame doubling process for doubling a number of frames produced by interlace/progressive conversion.

5. The information processing apparatus according to claim 1, further comprising:
a display that visually displays the image data; and
a switch that switches brightness of the display on the basis of the result of the detection by the power source detecting unit.

6. A method for controlling power saving in an information processing apparatus, the method comprising:
performing a correction for enhancing an image quality on image data;
detecting a type of a power source supplying an electric power to the information processing apparatus; and
controlling the correction on the basis of a result of the detected type of the power source.

7. The method according to claim 6, wherein whether the power source is a battery mounted to the information processing apparatus or an external power source is detected in detecting the type of the power source, and
wherein the correction is controlled to be regulated when the battery is detected as the power source.

8. The method according to claim 6, further comprising inhibiting the controlling of the correction.

9. The method according to claim 6, wherein the correction of the image data includes at least one of: a deblocking process for suppressing generation of block noises in a displayed image; a deringing process for suppressing generation of ringing noises in the displayed image; a sharpness process for emphasizing an outline of the displayed image; and a frame doubling process for doubling a number of frames produced by interlace/progressive conversion.

10. The method according to claim 6, further comprising switching brightness of a display on the basis of the result of the detection of the type of the power source.
